(19) Europäisches Patentamt
European Patent Office
Office européen des brevets

(11) Publication number : 0 237 187 B1

(12) # EUROPEAN PATENT SPECIFICATION

(45) Date of publication of patent specification : 19.06.91 Bulletin 91/25

(51) Int. Cl.$^5$ : C08L 71/12, C08L 51/00, C08L 63/00, C08L 77/00

(21) Application number : 87301146.4

(22) Date of filing : 10.02.87

(54) **Thermoplastic resin composition.**

The file contains technical information submitted after the application was filed and not included in this specification

(30) Priority : 13.02.86 JP 29797/86

(43) Date of publication of application : 16.09.87 Bulletin 87/38

(45) Publication of the grant of the patent : 19.06.91 Bulletin 91/25

(84) Designated Contracting States : DE FR GB IT

(56) References cited :
EP-A- 0 024 120
EP-A- 0 055 473
WO-A-85/05372

(73) Proprietor : SUMITOMO CHEMICAL COMPANY, LIMITED
Kitahama 4-chome 5-33
Chuo-ku Osaka 541 (JP)

(72) Inventor : Nishio, Taichi
2-14-34-3, Kurosuna
Chiba-shi Chiba 281 (JP)
Inventor : Sanada, Takashi
135, Iriyamazu
Ichihara-shi Chiba 299-01 (JP)
Inventor : Hosoda, Satoru
1-9, Yushudainishi
Ichihara-shi Chiba 299-01 (JP)

(74) Representative : Myerscough, Philip Boyd et al
J.A.Kemp & Co. 14, South Square Gray's Inn
London, WC1R 5EU (GB)

EP 0 237 187 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a novel thermoplastic resin composition suitable for shaped articles, sheet or film by injection molding or extrusion molding. More particularly, it relates to a novel thermoplastic resin composition superior in heat resistance, mechanical properties and processability, which contains modified rubber substances and epoxy compounds in a resin composition of polyphenylene ether and polyamide.

Polyphenylene ether is thermoplastic resin superior in various mechanical properties, heat resistance, electrical properties, chemical resistance, hot water resistance, flame resistance and dimention stability, but inferior in processability due to high melt viscosity and relatively inferior in impact resistance.

A composite material comprising polyphenylene ether and polystyrene is proposed in order to lessen melt viscosity of polyphenylene ether and to improve processability thereof, leaving various other good properties thereof unchanged. However, such inherent good properties of polyphenylene as heat resistance, flame resistance and chemical resistance are somewhat damaged when enough polystyrene is added to provide processability practically workable. No sufficient improvement is seen in impact resistance, either, even after polystyrene is added.

Polyamide is inferior in processability and impact resistance, absorbs too much water and encounters greatly large changes in various properties and in dimention during the practical use, although it is thermoplastic resin superior in heat resistance, rigidity, strength and oil resistance. Improvement in these difficulties has been desired.

Another composite material comprising polyphenylene ether and polyamide is proposed in order to posses good properties of the both resins and to improve processability and impact resistance. However, polyphenylene ether is poor compatible with polyamide because their melt viscosities are greatly far from each other. Simple blending encounters the following difficulties, for example ;

1. hardness in stable take-up of strands extruded and greatly lower processability in injection molding, because their melt viscosity difference is very large ; and
2. no improvement in mechanical properties, particularly in impact resistance, but rather lower than expected on the basis of their respective values.

One approach to dissolve the problems is the use of additives which are reactive or compatible with polyphenylene ether and/or polyamide (Japanese patent publications (Kokoku) 60-11966, (Kokai) 56-47432, 57-10642, 60-58463). Additives proposed in Japanese patent publications (Kokoku) 60-11966 and (Kokai) 56-47432 are somewhat effective but no desired improvement is obtained in impact resistance. There is limitation in their use. Another approach is the use of modified polystyrene or polyphenylene ether together with additives reactive to rubber (Japanese patent publications (Kokai) 56-49753, 57-10642, 57-165448 and 59-66452). However, this approach is not satisfactory yet, either, because it brings about unbalance between impact resistance and heat resistance and furthermore no desired improvement is obtainable in impact resistance. Their use is also restricted from a practical point of view.

EPA-24120 describes a resin composition comprising a resin (1) comprising 5 to 95% by weight of a polyphenylene oxide and 95 to 5% by weight of a polyamide and (2) 0.01 to 30 parts by weight of (A) a liquid diene polymer, (B) an epoxy compound or (C) a compound having in the molecule both (a) an ethylenic carbon-carbon double bond or a carbon to carbon triple bond and (b) a carboxylic acid, acid anhydride, acid amide, imido, carboxylic acid ester, amino or hydroxyl group per 100 parts of weight of the total of polyphenylene oxide and polyamide resin (1).

The present invention provides a thermoplastic resin composition comprising 100 parts by weight of a composition (A) comprising (a) 5-95% by weight of a polyphenylene ether obtained by oxidation polymerization of at least one phenol compound of the formula

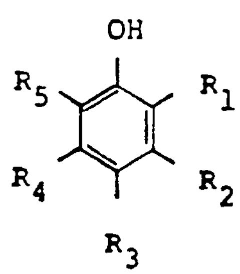

wherein $R_1$, $R_2$, $R_3$, $R_4$ and $R_5$ represent hydrogen, halogen or an optionally substituted hydrocarbon residue provided that at least one of them is hydrogen, and (b) 95-5% by weight of polyamide, 10-80 parts by weight of a rubber substance modified by copolymerisation with, as comonomer, a compound having an acid anhydride

group, an acid amido group, an amino group or a hydroxyl group or an oxazoline (B) and 0.01-30 parts by weight of an epoxy compound (C) which is an epoxy resin or an epoxy group containing copolymer selected from ethylene/unsaturated epoxy compound copolymer, ethylene/unsaturated epoxy compound/ethylenically unsaturated compound copolymer, epoxidised polyester and epoxidised polyamide.

In the accompanying drawings, Figures 1-3 are photographs (× 1500) under a scanning electron microscope of fracture plane of test pieces of example 1, comparison example 1 and comparison example 2, respectively, after Izod impact strength tests are over.

The polyphenylene ether resin (a) is obtained by oxidation polymerization of at least one said phenol compound with molecular oxygen or a gas containing it in the presence of a oxidation coupling catalyst.

Examples of $R_1$-$R_5$ are a hydrogen atom, a chlorine atom, a bromine atom, a fluorine atom, an iodine atom, a methyl group, an ethyl group, an n- or iso-propyl group, a pri.-, sec.- or tert.-butyl group, a chloroethyl group, a hydroxyethyl group, a phenylethyl group, a benzyl group, a hydroxymethyl group, a carboxyethyl group, a methoxycarbonylethyl group, a cyanoethyl group, a phenyl group, a chlorophenyl group, a methylphenyl group, a dimethylphenyl group, an ethylphenyl group or an allyl group.

Examples of phenol compound are phenol, o-, m- or p-cresol, 2,6-, 2,5-, 2,4- or 3,5-dimethylphenol, 2-methyl-6-phenylphenol, 2,6-diphenylphenol, 2,6-diethylphenol, 2-methyl-6-ethylphenol, 2,3,5-, 2,3,6- or 2,4,6-trimethylphenol, 3-methyl-6-t. butylphenol, thymol and 2-methyl-6-allylphenol.

Alternatively, copolymer of any of the phenol compound listed above and the other phenol compound, for example, polyhydroxy aromatic compound, may be employed. The polyhydroxy aromatic compound is, for example, bisphenol A, tetrabromobisphenol A, resorcin, hydroquinone and novolack resin.

Preferably polymers are homopolymer of 2,6-dimethylphenol or 2,6-diphenylphenol and copolymers of a large amount of 2,6-dimethylphenol and a small amount of 3-methyl-6-t-butylphenol or of 2,3,6-trimethylphenol.

An oxydation coupling catalyst employed for oxydation polymerization of phenol compound is not critical. Any catalyst may be used as long as it has polymerization ability. Examples are cuprous compound/ tert. amine such as cuprous chloride/triethylamine and cuprous chloride/pyridine ; cupric compound/amide/alkali metal hydroxide such as cupric chloride/pyridine/potassium hydroxide ; manganese salt/primary amine such as manganese chloride/ethanolamine and manganese acetate/ethylenediamine ; manganese salt/alcolate or phenolate such as manganese chloride/sodium methylate and manganese chloride/sodium phenolate ; and cobalt salt/tert. amine.

Polymerization temperature for preparing polyphenylene ether is 40°C or higher (high temperature polymerization) or lower (low temperature polymerization). Either temperature may be used, although polymers produced thereby have different properties.

Polyphenylene ether further includes that grafted with styrenic polymer or other polymer. For instance, grafted one is obtained by graft-polymerizing styrene monomer and/or other comonomer in the presence of polyphenylene ether and organic peroxide (Japanese patent publications (Kokoku) 47-47862, 48-12197, 49-5623, 52-38596 and 52-30991) or by melt-kneading polyphenylene ether and polystyrene in the presence of a radical initiator.

Polyamide resin (b) is one obtained by condensation-polymerization of three or more membered lactam, polymerizable ω-amino acid, or dibasic acid/diamine. Examples are, for example, polymers of ε-caprolactam, aminocaproic acid, enantholactam, 7-aminoheptanoic acid or 11-aminoundecanoic acid ; and polymers or copolymers of diamine/dicarboxylic acid, said diamine being, for example, hexamethylenediamine, nonamethylenediamine, undecamethylenediamine, dodecamethylenediamine and methaxylylenediamine and said dicarboxylic acid being, for example, terephthalic acid, isophthalic acid, adipic acid, sebacic acid, dodecanedioic acid and glutaric acid.

Examples of polyamide are aliphatic polyamide, for example, polyamide 6, polyamide 6.6, polyamide 6.10, polyamide 11, polyamide 12, and polyamide 6.12 ; and aromatic polyamide, for example, polyhexamethylenediamine terephthalamide, polyhexamethylenediamine isophthalamide, xylene group-containing polyamide. Polyamide may be used singly or in the blended form or copolymer form.

Blending ratio in (A) between (a) polyphenylene ether and (b) polyamide is 5-95% by weight of the former and 95-5% by weight of the latter.

When an amount of polyamide is less than 5% by weight, an improvement in solvent resistance and in processability is small. When an amount of polyamide is more than 95% by weight, thermal properties such as heat deformation temperature are degraded.

A modified rubber substance (B) is obtained by modifying a rubber substance such as a natural or synthetic polymeric substance which is elastic at room temperature. Examples of the rubber substance are natural rubber, butadiene homopolymer, random, block or grafted butadiene/styrene copolymer, isoprene homopolymer, chlorobutadiene homopolymer, butadiene/acrylonitrile copolymer, isobutylene homopolymer, isobutylene/butadiene copolymer, isobutylene/isoprene copolymer/acrylic ester copolymer, ethylene/propylene copolymer,

ethylene/propylene/diene copolymer, "Thiocol" (trade name) rubber, polysulfide rubber, polyurethane rubber, polyether rubber such as polypropylene oxide and epichlorhydrine rubber.

Any rubber substance may be used, no matter how it is prepared, for example, emulsion polymerization or solution polymerization, what catalyst is used, for, example, peroxide, trialkylaluminium, lithium halide or nickel, how much crosslinking degree is, what ratio of microstructure is, for example, cis, trans, vinyl group ; and how much average rubber particle size is. So far as copolymer is concerned, any of random, block and graft may be used.

Preferable rubber substance is ethylene/propylene copolymer and styrene copolymer.

The rubber substance is modified by copolymerization of the rubber substance with at least one comonomer selected from compounds having an acid anhydride group, an acid amido group, an amino group or a hydroxyl group and oxazolines. The nature of the copolymerization does not matter and can be random, block or graft. Suitable comonomers are those which are reactive or compatible with polyamide, polyphenylene ether and epoxy compound.

Examples of the comonomer are maleic anhydride, maleimide, maleic acid hydrazide, a reaction product of maleic anhydride and diamine, e.g. compounds having the formulas

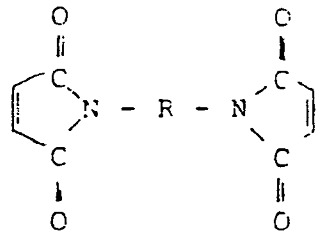

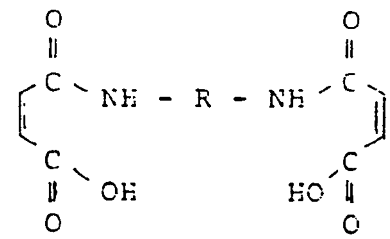

wherein R is an aliphatic or aromatic group, methylnadic anhydride, dichloromaleic anhydride, maleic acid amide and, natural fats and oils such as soybean oil, tung oil, castor oil, linseed oil, hempseed oil, cottonseed oil, sesame oil, rapeseed oil, peanut oil, camellia oil, olive oil, coconut oil and sardine oil ; acid amide or anhydride of an unsaturated carboxylic acid such as acrylic acid, butenoic acid, crotonic acid, vinyl acetic acid, methacrylic acid, pentenoic acid, angelic acid, tiglic acid, 2-pentenoic acid, 3-pentenoic acid, α-ethylacrylic acid, β-methyl crotonic acid, 4-pentenoic acid, 2-hexenoic acid, 2-methyl-2-pentenoic acid, 3-methyl-2-pentenoic acid, α-ethylcrotonic acid, 2,2-dimethyl-3-butenoic acid, 2-heptenoic acid, 2-octenoic acid, 4-decenoic acid, 9-undecenoic acid, 10-undecenoic acid, 4-dodecenoic acid, 5-dodecenoic acid, 4-tetradecenoic acid, 9-tetradecenoic acid, 9-hexadecenoic acid, 2-octadecenoic acid, 9-octadecenoic acid, eicosenoic acid, docosenoic acid, erucic acid, tetracocenoic acid, mycolipenic acid, 2,4-pentadienic acid, 2,4-hexadienic acid, diallyl acetic acid, geranic acid, 2,4-decadienic acid, 2,4-dodecadienic acid, 9,12-hexadecadienic acid, 9,12-octadecadienic acid, hexadecatrienic acid, linolic acid, linolenic acid, octadecatrienic acid, eisosadienic acid, eicosatrienic acid, eicosatetraenic acid, ricinoleic acid, eleostearic acid, oleic acid, eicosapentaenic acid, erucic acid, docosadienic acid, docosatrienic acid, docosatetraenic acid, docosapentaenic acid, tetracosenoic acid, hexacosenoic acid, hexacodienoic acid, octacosenoic acid, and tetraaconitic acid ; unsaturated oxazoline ; unsaturated alcohol such as allyl alcohol, crotyl alcohol, methyl-vinyl carbinol, allyl carbinol, methylpropenyl carbinol, 4-penten-1-ol, 10-undecene-1-ol, propargyl alcohol, 1,4-pentadiene-3-ol, 1,4-hexadiene-3-ol, 3,5-hexadiene-2-ol, 2,4-hexadiene-1-ol, alcohol of the formula :

$$C_nH_{2n-5}OH,\ C_nH_{2n-7}OH \text{ or } C_nH_{2n-9}OH$$

(n is an integer), 3-buten-1,2-diol, 2,5-dimethyl-3-hexene-2,5-diol, 1,5-hexadiene-3,4-diol or 2,6-octadiene-4,5-diol ; and unsaturated amine such as that where an OH group of the unsaturated alcohol is replaced by an $-NH_2$ group.

Preferable comonomer is maleic anhydride.

The modified rubber substance (B) is used in an amount of 10-100 parts by weight per 100 parts by weight of the composition (A). When an amount of (B) is less than 10 parts by weight, no sufficient improvement is obtained in impact strength, and when the amount is more than 80 parts by weight, no good balance between heat resistance and the other properties is obtained.

Epoxy compound (C) includes epoxy resin and epoxy group-containing copolymer. Examples are bis-phenol A epoxy resin, 0-cresol novolac epoxy resin, glycidylamine epoxy resin, three-functional epoxy resin and four-functional epoxy resin. The epoxy compound further includes a composition containing a reactive diluent.

Epoxy group-containing copolymer ois at least one selected from ethylene/unsaturated epoxy compound copolymer, ethylene/unsaturated epoxy compound/ethylenically unsaturated compound copolymer, epoxidized polyester and epoxidized polyamide. Unsaturated epoxy compound has in a molecule both an epoxy group and an unsaturated group which is copolymerizable with the ethylenically unsaturated compound, for instance, unsaturated glycidyl ester and unsaturated glycidyl ether having the formula (1) and (2) below :

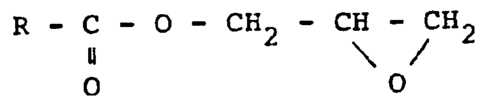 (1)

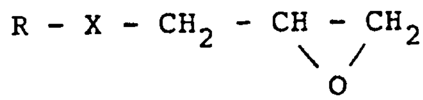 (2)

wherein R is a $C_2$-$C_{18}$ hydrocarbon group containing ethylenically unsaturated bond and X is $-CH_2-O-$ or

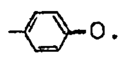

Examples are glycidyl acrylate, glycidyl methacrylate, glycidyl itaconate, allylglycidyl ether, 2-methylallyl glycidyl ether, styrene-p-glycidyl ether. The ethylenically unsaturated compound is vinyl ester of $C_2$-$C_6$ saturated carboxylic acid, $C_1$-$C_8$ saturated alcohol/acrylic or methacrylic acid ester, maleate, methacrylate, fumarate, halogenated vinyl, styrene, nitrile, vinyl ether or acrylamide. Examples are vinyl acetate, methyl acrylate, ethyl acrylate, methyl methacrylate, diethyl malate, diethyl fumarate, vinyl chloride, vinylidene chloride, styrene, acrylonitrile, isobutyl vinyl ether and acrylamide. They are used singly or in a mixture of at least two of them.

Composition ratio in the epoxy group-containing copolymer is not critical, but 0.1-50% by weight, more preferably 1-30% by weight of unsaturated epoxy compound is preferred.

The epoxy group-containing copolymer is prepared by various methods. Random copolymerization may be effected ; in which an unsaturated epoxy compound is introduced in backbone chain of copolymer. Examples are copolymerization in which unsaturated epoxy compound is allowed to react with ethylene in the presence of a radical initiator under $5 \cdot 10^4$ KPa – $4 \cdot 10^5$ KPa (500-4000 atm). at 100-300°C in the presence or absence of a solvent and a chain transfer Ethylene/glycidylmethacrylate copolymer and ethylene/glycidyle methacrylate/vinyl acetate copolymer are preferable.

The epoxy compound (C) is blended in such an amount as 0.01-30 parts by weight, preferably 0.01-20 parts by weight every 100 parts by weight of a composition (A) containing polyphenylene ether (a) and polyamide (b). When an amount of the epoxy compound is less than 0.01 parts by weight, an improvement is poor, while when an amount thereof is more than 30 parts by weight, more gelation proceeds and processability is degraded.

The present composition may be used in such a form as a composite material reinforced with such fibers as glass fibers, carbon fibers, polyamide fibers or metal whiskers ; or a composite material wherein inorganic fillers or flame retardants such as silica, alumina, calcium carbonate, talk, mica, carbonblack, $TiO_2$, ZnO or $Sb_2O_3$ ; lublicants ; nuclear agents ; plasticizers ; dyes ; pigments ; antistatic agents ; antioxidants ; and/or weatherability providing agents are added.

Any process is used to prepare the present resin composition.

Melt-blending methods for the components are the best from an economical point of view, although it is possible to blend the components in a solution and evaporate the solvent or precipitate in a non-solvent. Melt-blending is carried out in a single-screw or a twin-screw extruder, a kneader or so, preferably a high-speed twin-screw extruder.

Before kneading, it is preferable to blend powder or pellets of the component resins in a tumbler or a Henschel mixer. The first blending above is not always necessary. Alternatively, each resin may be fed to a kneader through a metering apparatus. Resin composition, after kneaded, is molded according to injection, extrusion and the like. Alternatively, dry blending the resin materials at the injection or extrusion molding without prekneading and direct kneading are made in the melt processing to produce a shaped article. Any order is used in the kneading step. Resins (A), (B) and (C) are kneaded together. Resins (A) and (B) are first kneaded before resin (C) is kneaded. However, it is not desirable to knead resins (B) and (C) and then add resin (A), because gellation occurs and desirable resin composition is not produced.

The present invention is explained referring to examples below. Surface hardness, heat distortion temperature (which is abbreviated as H.D.T.), Izod impact strength (3.2 mm thick) and melt index (M.I.) are observed in accordance with JIS K7202, JIS K7207, JIK K7110 and JIS K7210, respectively.

Polyphenylene ether, a modified rubber substance, and epoxy compound used in the examples and comparison examples are obtained below except that epoxy resin and polyamide commercially available are employed.

Polyphenylene ether :

Manganese chloride/ethylenediamine is added to a solution of 2,6-dimethylphenol in toluene and methanol and then the solution is subjected to oxydation polymerization under a molecular-oxygen atmosphere at 30°C. Intrinsic viscosity in chloroform is 0.55 dl/g.

Modified rubber substance :

A mixture of ethylene/propylene rubber, maleic anhydride and t.-butyl peroxylaurate is fed in an extruder (screw diameter : 30 mm, L/D = 28, barrel temperature : 230°C, screw rotation : 60 rpm) and extruded from a die to obtain strands which are then cooled in water to produce pellets.

Epoxy compound :

Glycidyl methacrylate/ethylene/vinyl acetate copolymer is prepared in accordance with Japanese patent publications (Kokai) 47-23490 and 48-11388. That is, glycidyl methacrylate, ethylene, vinyl acetate, a radical initiator and a chain transfer agent are successively fed in a reactor (40 ℓ) made of stainless steel whose temperature is controlable and which is equipped with an inlet, an outlet and a stirrer, and copolymerization is effected under stirring under $1{,}4 \times 10^5$ KPa – $1{,}6 \times 10^5$ KPa (1400-1600 atm). at 180-200°C.

Epoxy resin :

"Sumiepoxy"® ELM-434 manufactured by Sumitomo Chemical Company, Limited ; 4-functional epoxy resin, epoxy equivalent = 110-130 g/eq.

Polyamide :

Polyamide 6.6 : UBE Nylon® 2020B manufactured by Ube Kosan Co. Ltd.

Example 1

A resin composition (100 parts by weight) made from polyamide 6.6 (50% by weight, "UBE Nylon"® 2020B) and polyphenylene ether (50% by weight), maleic anhydride-grafted rubber (11.4 parts by weight) and glycidyl methacrylate/ethylene/vinyl acetate copolymer (2.3 parts by weight) were melted and kneaded at 270°C in a small batchwise twin-screw kneader ("Laboplastmil"® manufactured by Toyo Seiki).

A composition obtained was pressed at 270°C to prepare test pieces for Izod impact strength test and heat distortion temperature test.

Results are given in table 1 together with those of example 2 and of comparison examples 1, 2 and 3.

Example 2

A resin composition (100 parts by weight) made from polyamide (50% by weight, "UBE Nylon"® 2020B) and polyphenylene ether (50% by weight), maleic anhydride-grafted rubber (11.4 parts by weight) and an epoxy compound (2.3 parts by weight, "Sumiepoxy"® ELM-434) were treated similar to Example 1.

Comparison example 1

Polyamide 6.6 (50% by weight, "UBE Nylon"® 2020B) and polyphenylene ether (50% by weight) were melted and kneaded in the similar manner to that of example 1.

A composition obtained was pressed at 270°C to prepare test pieces.

Comparison example 2

A resin composition (100 parts by weight) made from polyamide 6.6 (50% by weight, "UBE Nylon"® 2020B) and polyphenylene ether (50% by weight) and maleic anhydride-grafted rubber (11.4 parts by weight) were melted and kneaded in the similar manner to that of example 1 to prepare test pieces.

Comparison example 3

Comparison example 2 was repeated except that 42.9 parts by weight of maleic anhydride-grafted rubber was used in place of 11.4 parts by weight.

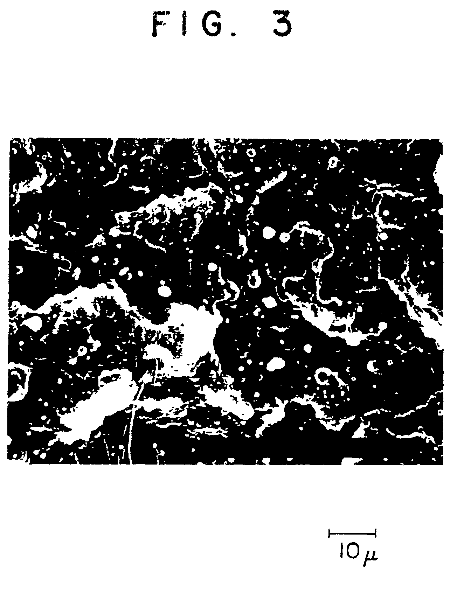

Table 1 shows that test pieces obtained in example 1 have better impact strength than those of comparison examples 1 and 2. In particular, impact strength of test pieces of example 1 is greatly higher than that of comparison example 2, even though heat resistance and surface hardness are substantially on the same levels, respectively. This fact is beyond expectation and this result owes to a small amount of epoxy compound added. Although it made a rule to use a larger amount of rubber in order to improve impact strength, comparison example 3 shows that such a usual practice rather greatly degrades heat resistance and hardness and lowers impact strength. In order to study the fact above, fracture planes after impact strength tests were over were observed by a scanning electron microscope. Figure 1 shows that particles of polyphenylene ether resin are greatly stretched and all ingredients are uniformly compatible. This structure contributes to uniformly distribute strain against breakage, and brings about further microscopic elongation until impact strength is improved. Figure 2 shows that ingredients are incompatible and particles of polyphenylene ether resin are clearly seen. In the Figure, black particles are residues from which resins have been escaped. Figure 3 shows that compatibility of ingredients is better than Figure 2 but is not satisfactory yet because some of circular peaks and valleys are seen.

Test pieces of example 1 and comparison examples 1 and 2 were melted and kneaded in a twin-screw kneader ("TEX".-® 44, Nihon Steel Manufacturing Co. Ltd.) to effect strand-cut test, respectively. Test pieces of comparison example 1 did not give strands, because melt-viscosity at a die was too low. Test pieces of example 1 and comparison example 2 gave strands without difficulty.

Example 2 gave higher impact strength and better balance among properties than comparison examples 1 and 2.

Example 3

Example 1 was repeated except that 80 parts by weight of maleic anhydride-grafted rubber and 9.5 parts by weight of glycidyl methacrylate/ethylene/vinyl acetate copolymer were used in place of 11.4 and 2.3 parts, respectively.

Results are given in Table 2.

Comparison example 4

Example 1 was repeated except that 5.4 parts by weight of maleic anhydride-grafted rubber and 2.2 parts by weight of glycidyl methacrylate/ethylene/vinyl acetate copolymer were used in place of 11.4 and 2.3 parts, respectively.

Results are given in Table 2.

Comparison example 5

Example 1 was repeated except that 110 parts by weight of maleic anhydride-grafted rubber and 11 parts by weight of glycidyl methacrylate/ethylene/vinyl acetate copolymer were used in place of 11.4 and 2.3 parts, respectively.

Results are given in Table 2.

Comparison example 6

Example 1 was repeated except that 3.0 parts by weight of maleic anhydride-grafted rubber and 2.1 parts

by weight of glycidyl methacrylate/ethylene/vinyl acetate copolymer were used in place of 11.4 and 2.3 parts, respectively.

Results are given in Table 2.

Table 2 shows that heat resistance and hardness are greatly damaged when an amount of maleic anhydride-grafted rubber is greater than 100 parts by weight and no remarkable improvement in impact strength is obtained when an amount of maleic anhydride-grafted rubber is smaller than 5 parts by weight.

Example 4

Example 1 was repeated except that 0.6 part by weight of glycidyl methacrylate/ethylene/vinyl acetate copolymer was used in place of 2.3 parts by weight.

Results are given in Table 3.

Example 5

Example 1 was repeated except that 28 parts by weight of glycidyl methacrylate/ethylene/vinyl acetate copolymer was used in place of 2.3 parts by weight.

Results are given in Table 3.

Comparison example 7

Example 1 was repeated except that 40 parts by weight of glycidyl methacrylate/ethylene/vinyl acetate copolymer was used in place of 2.3 parts by weight.

Results are given in Table 3.

Table 3 shows that gellation proceeds too much and balance among properties is degraded when an amount of epoxy compound is greater than 30 parts by weight.

As described above, polyamide is fully compatible with polyphenylene ether in the present resin composition, thereby impact strength is greatly improved without substantial degration of heat resistance. In particular, high impact strength has hardly been provided in polyamide/polyphenylene ether. The present invention succeeds in dissolving the difficulty encountered and broadening the use of the composition. The present resin composition is thermoplastic and easily able to mold or shape by any procedures familiar to the skilled in the art, e.g., injection molding, extrusion molding, to obtain, for example, a sheet or a film having good balance among heat resistance, impact strength and hardness.

Table 1

| | (A) | | every 100 parts by weight of (A) | |
|---|---|---|---|---|
| | Polyphenylene ether (a) (wt%) | Polyamide (b) (wt%) | Maleic anhydride grafted rubber (B) (parts by weight) | Epoxy compound (C) (parts by weight) |
| Example 1 | 50 | 50 | 11.4 | * 2.3 |
| ditto 2 | 50 | 50 | 11.4 | ** 2.3 |
| Comparison example 1 | 50 | 50 | - | - |
| ditto 2 | 50 | 50 | 11.4 | - |
| ditto 3 | 50 | 50 | 42.9 | - |

* Glycidyl methacrylate/ethylene/vinyl acetate copolymer

** Sumiepoxy® ELM-434

Table 1 (continued)

| | M.I. (g/10 min) 280°C 2.16 Kg | Izod Impact notched ($Kg \cdot cm/cm^2$) | H.D.T. (°C) 18.6 $Kg/cm^2$ | Surface hardness (Rockwell) (R) |
|---|---|---|---|---|
| Example 1 | 0.3 | 20.1 | 153 | 113 |
| ditto 2 | 0.1 | 17.8 | 144 | 110 |
| Comparison example 1 | 11.1 | 3.4 | 175 | 121 |
| ditto 2 | 1.3 | 13.0 | 152 | 108 |
| ditto 3 | 1.8 | 7.9 | 51 | 42 |

Table 2

| | (A) | | every 100 parts by weight of (A) | |
|---|---|---|---|---|
| | Polyphenylene ether (a) (wt%) | Polyamide (b) (wt%) | Maleic anhydride grafted rubber (B) (parts by weight) | *Epoxy compound (C) (parts by weight) |
| Example 3 | 50 | 50 | 80 | 9.5 |
| Comparison example 4 | 50 | 50 | 54 | 2.2 |
| Comparison example 5 | 50 | 50 | 110 | 11.0 |
| ditto 6 | 50 | 50 | 3.0 | 2.1 |

* Glycidyl methacrylate/ethylene/vinyl acetate copolymer

Table 2 (continued)

| | M.I. (g/10 min) 280°C 2.16 Kg | Izod Impact notched ($Kg \cdot cm/cm^2$) | H.D.T. (°C) 18.6 $Kg/cm^2$ | Surface hardness (Rockwell) (R) |
|---|---|---|---|---|
| Example 3 | 0.2 | 48 | 60 | 30 |
| Comparison example 4 | 0.3 | 7 | 164 | 117 |
| Comparison example 5 | < 0.1 | Not broken | 40 | 10 |
| ditto 6 | 8.0 | 43 | 170 | 118 |

Table 3

| | (A) | | every 100 parts by weight of (A) | |
|---|---|---|---|---|
| | Polyphenylene ether (a) (wt%) | Polyamide (b) (wt%) | Maleic anhydride grafted rubber (B) (parts by weight) | *Epoxy compound (C) (parts by weight) |
| Example 4 | 50 | 50 | 11.4 | 0.6 |
| ditto 5 | 50 | 50 | 11.4 | 28 |
| Comparison example 7 | 50 | 50 | 11.4 | 40 |

* Glycidyl methacrylate/ethylene/vinyl acetate copolymer

Table 3 (continued)

| | M.I. (g/10 min) 280°C 2.16 Kg | Izod Impact notched ($Kg \cdot cm/cm^2$) | H.D.T. (°C) 18.6 $Kg/cm^2$ | Surface hardness (Rockwell) (R) |
|---|---|---|---|---|
| Example 4 | 10.1 | 14.5 | 162 | 110 |
| ditto 5 | 0.1 | 23.0 | 101 | 80 |
| Comparison example 7 | Gelled unable to observe | 10.0 | 75 | 72 |

## Claims

1. A thermoplastic resin composition comprising 100 parts by weight of a composition (A) comprising (a) 5-95% by weight of a polyphenylene ether obtained by oxidation polymerization of at least one phenol compound of the formula

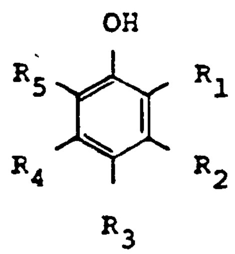

wherein $R_1$, $R_2$, $R_3$, $R_4$ and $R_5$ represent hydrogen, halogen or an optionally substituted hydrocarbon residue provided that at least one of them is hydrogen, and (b) 95-5% by weight of polyamide, 10-80 parts by weight of a rubber substance modified by copolymerisation with, as comonomer, a compound having an acid anhydride group, an acid amido group, an amino group or a hydroxyl group or an oxazoline (B) and 0.01-30 parts by weight of an epoxy compound (C) which is an epoxy resin or an epoxy group containing copolymer selected from ethylene/unsaturated epoxy compound copolymer, ethylene/unsaturated epoxy compound/ethylenically unsaturated compound copolymer, epoxidised polyester and epoxidised polyamide.

2. A thermoplastic resin composition according to claim 1 wherein the polyphenylene ether (a) is a homopolymer of 2,6-dimethylphenol or 2,6-diphenyl-phenol, or a copolymer of a predominant amount of 2,6-dimethylphenol and a minor amount of 3-methyl-6-t-butylphenol or 2,3,6-trimethylphenol.

3. A thermoplastic resin composition according to claim 1 or 2 wherein the polyamide (b) is a condensation-polymerization product of a three or more membered lactam, ω-amino acid or dibasic acid/diamine.

4. A thermoplastic resin composition according to claim 1, 2 or 3 wherein (B) is a rubber substance modified by maleic anhydride.

5. A thermoplastic resin composition according to claim 1, 2 or 3 wherein (B) is an ethylene/propylene rubber or a styrenic rubber modified by maleic anhydride.

6. A thermoplastic resin composition according to any one of the preceding claims wherein the epoxy compound (C) is a bisphenol A epoxy resin, an 0-cresol novolac epoxy resin, a glycidyl amine epoxy resin, a three-functional epoxy resin or a four-functional epoxy resin.

7. A thermoplastic resin composition according to any one of claims 1 to 5 wherein the epoxy compound (C) is an epoxy group containing copolymer containing 0.1-50% by weight of unsaturated epoxy compound.

8. A thermoplastic resin composition according to claim 7 wherein the amount of unsaturated epoxy compound is 1-30% by weight.

9. A thermoplastic resin composition according to any one of the preceding claims which contains 0.01-20 parts by weight of the epoxy compound (C) per 100 parts by weight of the composition (A).

10. A thermoplastic resin composition according to any one of the preceding claims in the form of a composite material comprising inorganic reinforcing fillers and/or flame retardants.

## Ansprüche

1. Thermoplastische Harzzusammensetzung, umfassend 100 Gewichtsteile einer Zusammensetzung (A), umfassend (a) 5-95 Gew.-% eines Polyphenylenethers, der durch Oxidationspolymerisation von mindestens einer Phenolverbindung der Formel

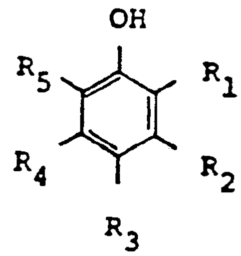

erhalten wurde, worin $R_1$, $R_2$, $R_3$, $R_4$ und $R_5$ Wasserstoff, Halogen oder einen gegebenenfalls substituierten Kohlenwasserstoffrest mit der Maßgabe, daß mindestens einer von ihnen Wasserstoff ist, repräsentieren, und (b) 95-5 Gew.-% Polyamid, 10-80 Gewichtsteile einer Kautschuksubstanz (B), welche durch Copolymerisation mit einer Verbindung mit einer Säureanhydridgruppe, einer Säureamidgruppe, einer Aminogruppe oder einer Hydroxylgruppe oder einem Oxazolin als Comonomer modifiziert wurde und 0,01-30 Gewichtsteile einer Epoxyverbindung (C), welche ein Epoxyharz oder ein eine Epoxygruppe enthaltendes Copolymer ist, ausgewählt aus Ethylen/ungesättigte Epoxyverbindung-Copolymer, Ethylen/ungesättigte Epoxyverbindung/ethylenisch ungesättigte Verbindung-Copolymer, epoxidiertem Polyester und epoxidiertem Polyamid.

2. Thermoplastische Harzzusammensetzung nach Anspruch 1, worin der Polyphenylenether (a) ein Homopolymer von 2,5-Dimethylphenol oder 2,6-Diphenylphenol oder ein Copolymer aus einer überwiegenden Menge 2,6-Dimethylphenol und einer kleineren Menge 3-Methyl-6-t-butylphenol oder 2,3,6-Trimethylphenol darstellt.

3. Thermoplastische Harzzusammensetzung nach Anspruch 1 oder 2, worin das Polyamid (b) das Produkt einer Kondensationspolymerisation eines drei- oder mehrgliedrigen Lactams, einer ω-Aminosäure oder von zweibasischer Säure/Diamin darstellt.

4. Thermoplastische Harzzusammensetzung nach Anspruch 1, 2 oder 3, worin (B) eine mit Maleinsäureanhydrid modifizierte Kautschuksubstanz darstellt.

5. Thermoplastische Harzzusammensetzung nach Anspruch 1, 2 oder 3, worin (B) ein Ethylen/Propylen-Kautschuk oder ein mit Maleinsäureanhydrid modifizierter Styrol-Kautschuk ist.

6. Thermoplastische Harzzusammensetzung nach irgendeinem der vorhergehenden Ansprüche, worin die Epoxyverbindung (C) ein Bisphenol-A Epoxyharz, ein 0-Kresol-Novolak-Epoxyharz, eine Glycidylamin-Epoxyharz, ein dreifunktionelles Epoxyharz oder ein vierfunktionelles Epoxyharz darstellt.

7. Thermoplastische Harzzusammensetzung nach irgendeinem der Ansprüche 1 bis 5, worin die Epoxyverbindung (C) ein Epoxygruppen enthaltendes Copolymer ist, welches 0,1 bis 50 Gew.-% ungesättigte Epoxyverbindung enthält.

8. Thermoplastische Harzzusammensetzung nach Anspruch 7, worin die Menge der ungesättigten Epoxyverbindung 1 bis 30 Gew.-% beträgt.

9. Thermoplastische Harzzusammensetzung nach irgendeinem der vorhergehenden Ansprüche, die 0,01-20 Gewichtsteile der Epoxyverbindung (C) pro 100 Gewichtsteile der Zusammensetzung (A) enthält.

10. Thermoplastische Harzzusammensetzung nach irgendeinem der vorhergehenden Ansprüche in Form eines Verbundmaterials, welches anorganische verstärkende Füllstoffe und/oder Flammschutzmittel umfaßt.

## Revendications

1. Composition thermoplastique de résines comprenant 100 parties en poids d'une composition (A) comprenant (a) de 5 à 95% en poids d'un poly(oxyde de phénylène) obtenu par polymérisation par oxydation d'au moins un composé phénolique de formule

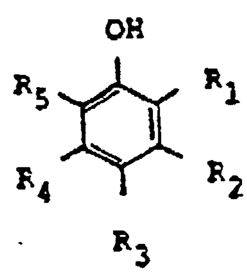

dans laquelle $R_1$, $R_2$, $R_3$, $R_4$ et $R_5$ représentent l'hydrogène, un halogène ou un radical hydrocarboné éventuellement substitué, pourvu que l'un au moins d'entre eux soit l'hydrogène et (b) de 95 à 5% en poids d'un polyamide, de 10 à 80 parties en poids d'une substance de caoutchouc modifiée par copolymérisation avec, comme comonomère, un composé ayant un groupe anhydride d'acide, un groupe amido, un groupe amino ou un groupe hydroxyle ou une oxazoline (B) et de 0,01 à 30 parties en poids d'un composé époxyde (C), qui est une résine époxyde ou un copolymère contenant un groupe époxyde choisi parmi les copolymère d'éthylène et d'un composé époxyde insaturé, les copolymères d'éthylène, d'un composé époxyde insaturé et d'un composé à saturation éthylénique, les polyesters époxydés et les polyamides époxydés.

2. Composition thermoplastique de résines suivant la revendication 1, dans laquelle le poly(oxyde de phényléne) (a) est un homopolymère de 2,6-diméthylphénol ou de 2,6-diphénylphénol ou un copolymère d'une quantité prépondérante de 2,6-diméthylphénol et d'une moindre quantité de 3-méthyl-6-t-butylphénol ou de 2,3,6-triméthylphénol.

3. Composition thermoplastique de résines suivant la revendication 1 ou 2, dans laquelle le polyamide (b) est un produit de polycondensation d'un lactame à trois chaînons ou à plus de trois chaînons et d'un ω-amino acide ou d'un diacide et d'une diamine.

4. Composition thermoplastique de résines suivant la revendication 1, 2 ou 3, dans laquelle (B) est une substance de caoutchouc modifiée par l'anhydride maléïque.

5. Composition thermoplastique de résines suivant la revendication 1, 2 ou 3, dans laquelle (B) est un caoutchouc éthytène/propylène ou un caoutchouc styrénique modifié par l'anhydride maléïque.

6. Composition thermoplastique de résines suivant l'une quelconque des revendications précédentes, dans lequel le composé époxyde (C) est une résine époxyde de bisphénol A, une résine époxyde novolaque de 0-crésol, une résine époxyde de glycidylamine, une résine époxyde trifonctionnelle ou une résine époxyde tétrafonctionnelle.

7. Composition thermoplastigue de résines suivant l'une quelconque des revendications 1 à 5, dans laquelle le composé époxyde (C) est un copolymère contenant un groupe époxyde et contenant de 0 à 50% en poids de composé époxyde insaturé.

8. Composition thermoplastique de résines suivant la revendication 7, dans laquelle la quantité du composé époxyde insaturé est comprise entre 1 et 30% en poids.

9. Composition thermoplastique de résines suivant l'une quelconque des revendications précédentes, qui contient de 0,01 à 20 parties en poids du composé (C) pour 100 parties en poids de la composition (A).

10. Composition thermoplastique de résines suivant l'une quelconque des revendications précédentes, sous la forme d'un matériau composite comprenant des charges minérales de renforcement et/ou des agents retardant la propagation du feu.

FIG. 1

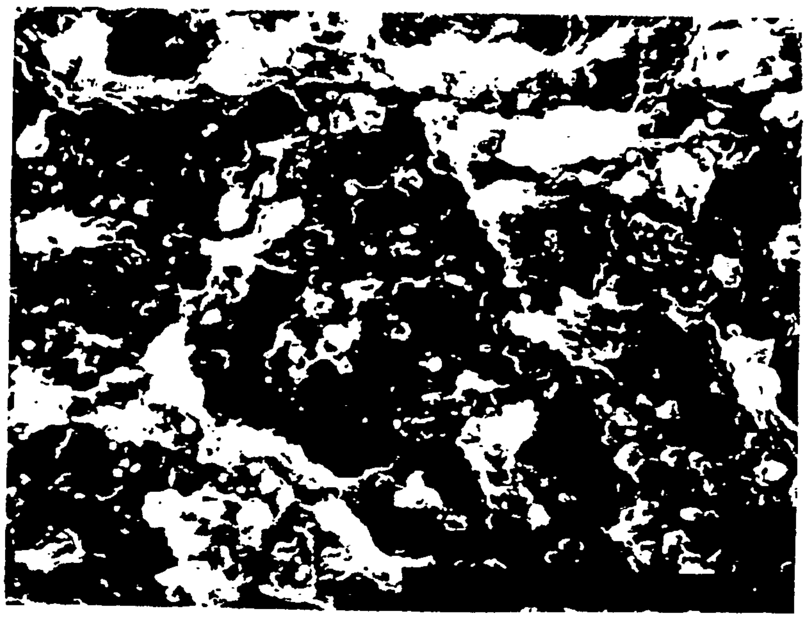

10μ

FIG. 2

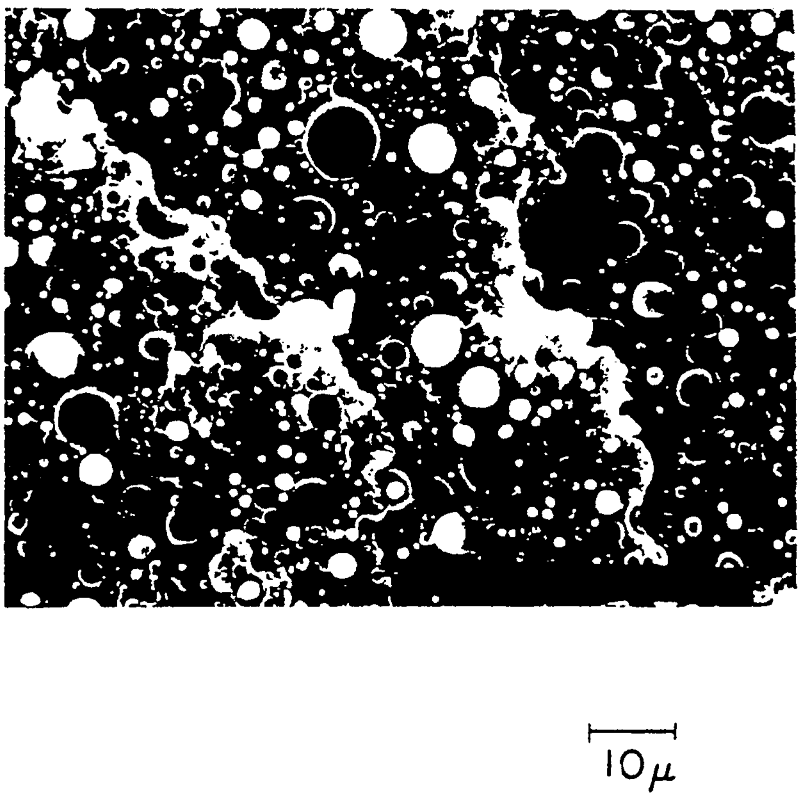

FIG. 3